# EUROPEAN PATENT APPLICATION

(11) **EP 4 787 584 A1**
(43) Date of publication of application: **05.08.2026**
(21) Application number: 24870888.5
(22) Date of filing: 26.09.2024
(51) Int. Cl.: H01M 50/30, H01M 50/342

(54) **BATTERY AND ELECTRIC DEVICE**

(30) Priority: 26.09.2023 CN 202322646894 U
(71) Applicant: BYD Company Limited, Shenzhen, Guangdong 518118 (CN)
(72) Inventor: ZHANG, Zhongfeng, Shenzhen, Guangdong 518118 (CN); WANG, Qing, Shenzhen, Guangdong 518118 (CN); WANG, Jianjun, Shenzhen, Guangdong 518118 (CN)
(74) Representative: Mathys & Squire
(86) International application number: PCT/CN2024/121483
(87) International publication number: WO 2025/067348

(57) **Abstract**

An electric device, comprising a battery. The battery comprises a battery case, a battery cell, an elastic sealing member and a conductive pillar. The battery case and the elastic sealing member are connected and define an accommodating cavity, and the battery cell is arranged in the accommodating cavity. A through hole which extends in a first direction and is used for communicating the exterior with the accommodating cavity is formed in the elastic sealing member, one end of the conductive pillar passes through the through hole and is electrically connected to a tab of the battery cell, and the other end of the conductive pillar protrudes out of the elastic sealing member. A pressure relief portion is arranged on the elastic sealing member, and the pressure relief portion is configured to rupture when the pressure in the accommodating cavity is greater than a pressure relief threshold, so as to release the pressure in the battery.

## Description

### CROSS-REFERENCE TO RELATED APPLICATIONS

This disclosure claims priority to Chinese Patent Application titled "BATTERY AND ELECTRIC DEVICE" with application number 202322646894.9, filed with the Chinese Patent Office on September 26, 2023, which is incorporated herein by reference in its entirety.

### FIELD

The present disclosure relates to the field of battery technology, particularly to a battery and electric device.

### BACKGROUND

Cylindrical batteries have advantages such as good safety performance, high energy density, and small internal resistance, and thus have a wide range of applications.

In the related art, in order to achieve pressure relief of cylindrical batteries, a cross-shaped notch is usually designed at the case bottom, and when the internal pressure of the battery is excessively high, the cross-shaped notch ruptures to perform pressure relief. However, this process is complicated by the manner in which a notch is designed at the bottom of the battery, and the strength of the case bottom is reduced.

### SUMMARY

The objective of the present disclosure is to provide a battery and electric device, so as to solve the technical problem existing in the related art.

In order to achieve the above objective, the first aspect of the present disclosure provides a battery. The battery includes:
a battery case;
an elastic sealing member connected to the battery case and defining an accommodating cavity, the elastic sealing member being formed with a through hole extending along a first direction, the through hole being configured to communicate an exterior with the accommodating cavity, and a pressure relief portion being arranged on the elastic sealing member, the pressure relief portion being configured to rupture when the pressure in the accommodating cavity is greater than a pressure relief threshold, so as to release the pressure in the battery;
a battery cell arranged in the accommodating cavity;
a conductive pillar, having one end that passes through the through hole and is electrically connected to a tab of the battery cell, and the other end that protrudes out of the elastic sealing member.

In some embodiments, the pressure relief portion includes a pressure relief channel and a weak portion, the pressure relief channel is configured to communicate the exterior with the accommodating cavity, the weak portion blocks the pressure relief channel, and the weak portion is configured to rupture when the pressure in the accommodating cavity is greater than a pressure relief threshold.

In some embodiments, the pressure relief channel includes a first channel opening and a second channel opening, the second channel opening is close to the accommodating cavity, and the first channel opening corresponds to the second channel opening;
the weak portion is arranged at the first channel opening in a blocking configuration; and/or the weak portion is arranged at the second channel opening in a blocking configuration; and/or, the weak portion is arranged inside the pressure relief channel in a blocking configuration, and the weak portion is located between the first channel opening and the second channel opening.

In some embodiments, the pressure relief channel extends along the first direction, in a direction from the first channel opening to the second channel opening,
the pressure relief channel has the same channel diameter along a second direction, or the channel diameter of the pressure relief channel gradually increases along the second direction, or the channel diameter of the pressure relief channel gradually decreases along the second direction;
wherein the first direction and the second direction are perpendicular to each other.

In some embodiments, the weak portion is arranged at the second channel opening in a blocking configuration, a thickness of the weak portion along the first direction is in the range of 0.1 mm to 0.3 mm, and a length of the pressure relief channel along the first direction is in the range of 3.1 mm to 4 mm.

In some embodiments, the pressure relief channel extends along the first direction, in the direction from the first channel opening to the second channel opening, the pressure relief channel includes a first channel and a second channel;
in the direction from the first channel opening to the second channel opening, the channel diameter of the first channel gradually decreases along a second direction, the second channel has the same channel diameter along the second direction, and the weak portion is arranged at the second channel opening in a blocking configuration;
wherein the first direction and the second direction are perpendicular to each other.

In some embodiments, the pressure relief channel extends along the first direction, in the direction from the first channel opening to the second channel opening, the pressure relief channel includes a first channel and a second channel;
in the direction from the first channel opening to the second channel opening, the channel diameter of the first channel gradually decreases along a second direction, the channel diameter of the second channel gradually increases along the second direction, and the weak portion is arranged between the first channel and the second channel, wherein the first direction and the second direction are perpendicular to each other; or,
in the direction from the first channel opening to the second channel opening, the channel diameter of the first channel gradually increases along a second direction, the channel diameter of the second channel gradually decreases along the second direction, and the weak portion is arranged between the first channel and the second channel, wherein the first direction and the second direction are perpendicular to each other.

In some embodiments, the size of the first channel along the first direction is in the range of 3.3 mm to 4 mm, and the size of the second channel along the first direction is in the range of 2.8 mm to 3.2 mm.

In some embodiments, the pressure relief channel extends along the first direction and is spaced apart from the through hole along a second direction, and a cross-sectional shape of the pressure relief channel along the first direction is configured to be rectangular or trapezoidal; wherein the first direction and the second direction are perpendicular to each other.

In the second aspect of the present disclosure, an electric device is further provided, which includes the aforementioned battery.

In the aforementioned technical solution, by providing an elastic sealing member with a pressure relief portion arranged on it, when the gas pressure inside an accommodating cavity is greater than a pressure relief threshold, the gas can break through the pressure relief portion, achieving the purpose of pressure relief. The pressure relief method can avoid scoring on the bottom of a battery case, thereby simplifying the process and avoiding reducing the strength of the bottom of the battery case. In addition, the through hole, on the one hand, facilitates the extension of the conductive pillar, and on the other hand, can effectively limit the conductive pillar, thereby improving the stability of the conductive pillar.

Other features and advantages of the present disclosure will be elaborated in the subsequent detailed description section.

### BRIEF DESCRIPTION OF THE DRAWINGS

The accompanying drawings are intended to provide further understanding of the present disclosure and form part of the specification, serving together with the following detailed description to explain the present disclosure, but do not constitute any limitation thereto. In the drawings:
FIG. 1 shows a schematic cross-sectional diagram of a battery according to an embodiment of the present disclosure.
FIG. 2 shows a schematic cross-sectional diagram of an elastic sealing member of a battery according to the first embodiment of the present disclosure.
FIG. 3 shows a schematic cross-sectional diagram of an elastic sealing member of a battery according to the second embodiment of the present disclosure.
FIG. 4 shows a schematic cross-sectional diagram of an elastic sealing member of a battery according to the third embodiment of the present disclosure.
FIG. 5 shows a schematic cross-sectional diagram of an elastic sealing member of a battery according to the fourth embodiment of the present disclosure.
FIG. 6 shows a schematic cross-sectional diagram of an elastic sealing member of a battery according to the fifth embodiment of the present disclosure.
FIG. 7 shows a schematic cross-sectional diagram of an elastic sealing member of a battery according to the sixth embodiment of the present disclosure.
FIG. 8 shows a schematic diagram of an electric device according to an embodiment of the present disclosure.

### DETAILED DESCRIPTION

The specific embodiments of this disclosure are described in detail below with reference to the accompanying drawings. It will be understood that the specific embodiments described here are only used for illustrating and explaining this disclosure, and are not intended to limit it.

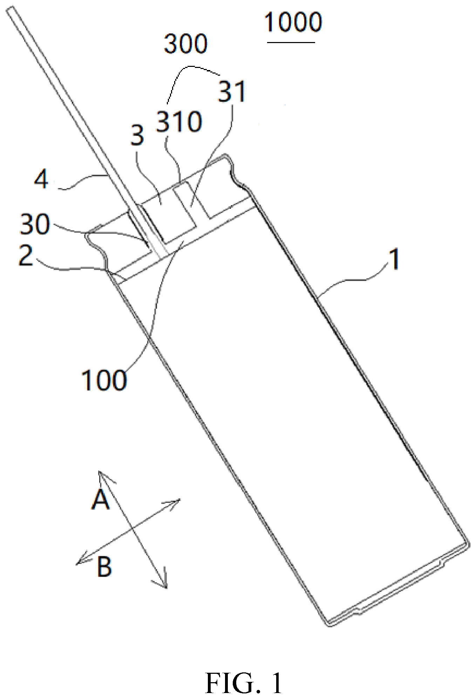

In this disclosure, unless indicated to the contrary, directional terms such as "first direction, second direction" can be referred to as shown in FIG. 1; terms such as "first, second" are used solely to distinguish one element from another, and do not indicate order or importance.

With reference to FIGS. 1 to 7, this disclosure provides a battery 1000, the battery 1000 includes a battery case 1, a battery cell 2, an elastic sealing member 3 and a conductive pillar 4. The battery case 1 and the elastic sealing member 3 are connected and define an accommodating cavity 100, and the battery cell 2 is arranged in the accommodating cavity 100. A through hole 30 which extends along a first direction A and is used for communicating the exterior with the accommodating cavity 100 is formed in the elastic sealing member 3, one end of the conductive pillar 4 passes through the through hole 30 and is electrically connected to a tab of the battery cell 2, and the other end of the conductive pillar 4 protrudes out of the elastic sealing member 3. A pressure relief portion 300 is arranged on the elastic sealing member 3, and the pressure relief portion 300 is configured to rupture when the pressure in the accommodating cavity 100 is greater than a pressure relief threshold, so as to release the pressure in the battery 1000.

In the aforementioned technical solution, by providing an elastic sealing member 3 with a pressure relief portion 300 arranged on it, when the gas pressure inside a battery case 1 is greater than a pressure relief threshold, the gas can break through the pressure relief portion 300, achieving the purpose of pressure relief. The pressure relief method can avoid scoring on the bottom of a battery case 1, thereby simplifying the process and avoiding reducing the strength of the bottom of the battery case 1. In addition, the through hole 30, on the one hand, facilitates the extension of the conductive pillar 4, and on the other hand, can effectively limit the conductive pillar 4, thereby improving the stability of the conductive pillar 4.

In some embodiments, when the battery cell 2 is a single conductive pillar battery cell, the through hole 30 on the corresponding elastic sealing member 3 can be set to one; when the battery cell 2 is a dual conductive pillar battery cell, the through hole 30 on the corresponding elastic sealing member 3 can be set to two. This disclosure does not limit the number of through holes 30.

In some embodiments, with reference to FIG. 1, the pressure relief portion 300 includes a pressure relief channel 31 and a weak portion 310, the pressure relief channel 31 is configured to communicate the exterior with the accommodating cavity 100, the weak portion 310 blocks the pressure relief channel 31 and is configured to rupture when the pressure in the accommodating cavity 100 is greater than a pressure relief threshold.

In this embodiment, when the pressure inside the accommodating cavity 100 is greater than the pressure relief threshold, the weak portion 310 will rupture under the pressure of the gas, thereby discharging the gas from the accommodating cavity 100 through the pressure relief channel 31, enhancing safety performance. However, this disclosure does not limit the specific structural design of the pressure relief portion 300. Additionally, the pressure relief portion 300 can be integrally molded on the elastic sealing member 3, that is, the pressure relief channel 31 is formed inside the elastic sealing member 3, and the weak portion 310 is part of the elastic sealing member 3. For example, the weak portion 310 can be constructed as an elastic pressure relief membrane.

In some embodiments, with reference to FIGs. 1 to 4, the pressure relief channel 31 includes a first channel opening 311 and a second channel opening 312, the second channel opening 312 is close to the accommodating cavity 100, and the first channel opening 311 corresponds to the second channel opening 312; the weak portion 310 is arranged at the first channel opening 311 in a blocking configuration; and/or the weak portion 310 is arranged at the second channel opening 312 in a blocking configuration; and/or, the weak portion 310 is arranged inside the pressure relief channel 31 in a blocking configuration and is located between the first channel opening 311 and the second channel opening 312.

That is, the present disclosure does not impose any restrictions on the specific placement of the weak portion 310 within the pressure relief channel 31. It can be arranged at either end of the pressure relief channel 31, or at any arbitrary location within the pressure relief channel 31. Furthermore, the present disclosure also does not impose any limitations on the number of the weak portions 310.

For example, the weak portion 310 can be set up as one, which can be arranged at the first channel opening 311 of the pressure relief channel 31, at the second channel opening 312 of the pressure relief channel 31, or inside the pressure relief channel 31. Alternatively, the weak portion 310 can be set up as two, with one weak portion 310 arranged at the first channel opening 311 or the second channel opening 312, and the other weak portion 310 arranged inside the pressure relief channel 31; or with one weak portion 310 arranged at the first channel opening 311 and the other weak portion 310 arranged at the second channel opening 312. Or, the weak portion 310 can be set up as three, with two weak portions 310 arranged at the first channel opening 311 and the second channel opening 312 respectively, and the other weak portion 310 arranged inside the pressure relief channel 31.

In addition, for the pressure relief channel 31, it can be constructed in any appropriate shape. For example, the pressure relief channel 31 can be constructed as a straight channel extending along the first direction A, or it can be a serpentine curved channel. This disclosure does not impose any limitations on this.

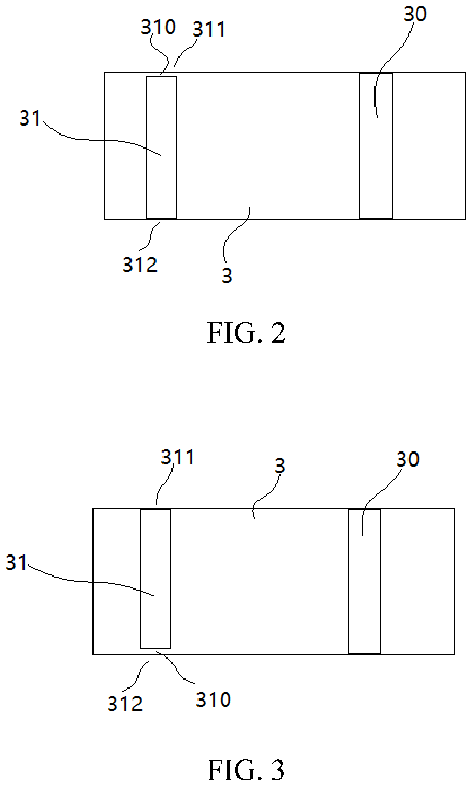

With reference to FIGs. 2 to 4, the pressure relief channel 31 extends along the first direction A, in the direction from the first channel opening 311 to the second channel opening 312, the pressure relief channel 31 has the same channel diameter along a second direction B, or the channel diameter of the pressure relief channel 31 gradually increases along the second direction B, or the channel diameter of the pressure relief channel 31 gradually decreases along the second direction B; wherein the first direction A and the second direction B are perpendicular to each other. That is, this disclosure does not limit the channel diameter of the pressure relief channel 31 in the second direction B, as long as it can meet the pressure relief requirements of the battery 1000.

In other embodiment, with reference to FIG. 3, the weak portion 310 is arranged at the second channel opening 312 in a blocking configuration, a thickness of the weak portion 310 along the first direction A is in the range of 0.1 mm to 0.3 mm, and a length of the pressure relief channel 31 along the first direction A is in the range of 3.1 mm to 4 mm.

The specific thickness of the weak portion 310 can be set according to the specific pressure relief requirements of the battery 1000. When the pressure relief threshold is relatively large, the thickness of the weak portion 310 can be set to be relatively thick; and when the pressure relief threshold is relatively small, the thickness of the weak portion 310 can be set to be relatively thin. The present disclosure does not limit the specific thickness of the weak portion 310.

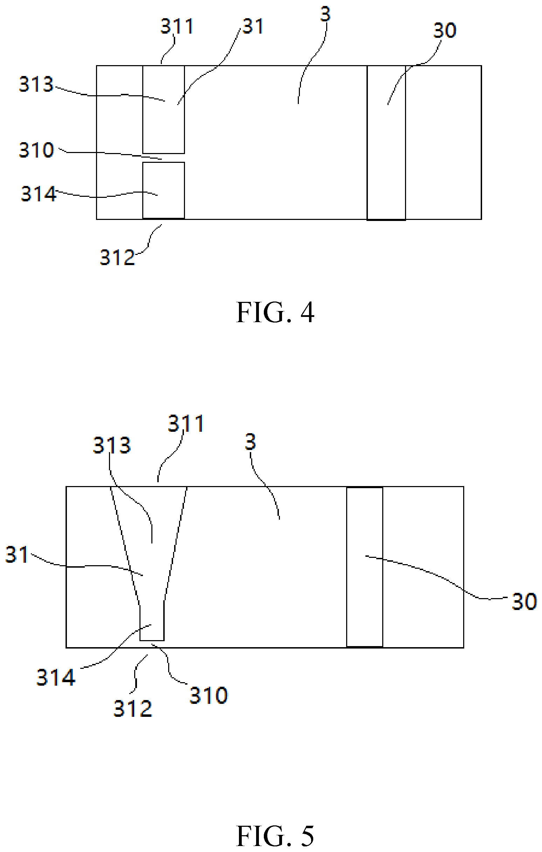

In some embodiments, with reference to FIG. 5, the pressure relief channel 31 extends along the first direction A, in the direction from the first channel opening 311 to the second channel opening 312, the pressure relief channel 31 includes a first channel 313 and a second channel 314; in the direction from the first channel opening 311 to the second channel opening 312, the channel diameter of the first channel 313 gradually decreases along a second direction B, the second channel 314 has the same channel diameter along the second direction B, and the weak portion 310 is arranged at the second channel opening 312 in a blocking configuration; wherein the first direction A and the second direction B are perpendicular to each other. That is, regarding the channel diameter of the pressure relief channel 31 along the second direction B, it can also be that the channel diameter of the first channel 313 along the second direction B gradually decreases, while the channel diameter of the second channel 314 along the second direction B remains the same. This disclosure does not impose any limitations on this.

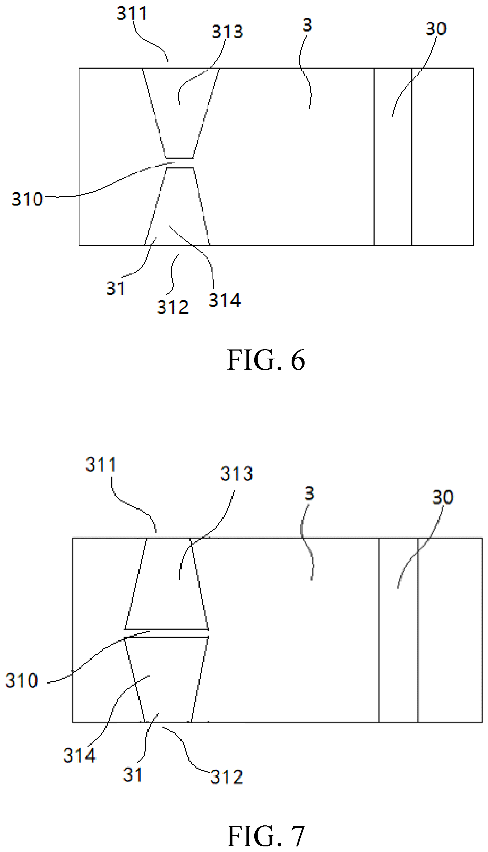

With reference to FIG. 6, the pressure relief channel 31 extends along the first direction A, in the direction from the first channel opening 311 to the second channel opening 312, the pressure relief channel 31 includes a first channel 313 and a second channel 314; in the direction from the first channel opening 311 to the second channel opening 312, the channel diameter of the first channel 313 gradually decreases along a second direction B, the channel diameter of the second channel 314 gradually increases along the second direction B, and the weak portion 310 is arranged between the first channel 313 and the second channel 314, wherein the first direction A and the second direction B are perpendicular to each other. That is, when the weak portion 310 is arranged in the pressure relief channel 31, the channel diameters of both the first channel 313 and the second channel 314 located on both sides of the weak portion 310 can undergo gradual changes. However, the present disclosure does not limit the specific shape of the pressure relief channel 31.

With reference to FIG. 6, the size of the first channel 313 along the first direction A is in the range of 3.3 mm to 4 mm, and the size of the second channel 314 along the first direction A is in the range of 2.8 mm to 3.2 mm. For example, the size of the first channel 313 along the first direction A can be 3.3mm, 4.0mm, or 3.8mm. This disclosure does not limit the specific size of the first channel 313 along the first direction A. The size of the second channel 314 along the first direction A can be 2.8mm, 3.2mm, or 2.9mm. This disclosure does not limit the specific size of the second channel 314 along the first direction A.

Or, in other embodiment, with reference to FIG. 7, in the direction from the first channel opening 311 to the second channel opening 312, the channel diameter of the first channel 313 gradually increases along a second direction B, the channel diameter of the second channel 314 gradually decreases along the second direction B, and the weak portion 310 is arranged between the first channel 313 and the second channel 314, wherein the first direction A and the second direction B are perpendicular to each other.

In some embodiments, the elastic sealing member 3 is designed as an elastic cover, which can be constructed as an integrally molded structure, meaning the weak portion 310 is integrally molded onto the elastic sealing member 3. Additionally, rubber can be chosen as the material for both the elastic sealing member 3 and the weak portion 310, but this disclosure does not limit the specific materials used for the elastic sealing member 3 and the weak portion 310. Furthermore, this elastic cover can be sealingly connected to the battery case 1 using a rolling groove sealing device, enhancing the sealing performance of the connection.

In other embodiment, with reference to FIG. 1, the pressure relief channel 31 extends along the first direction A and is spaced apart from the through hole 30 along a second direction B, and the cross-sectional shape of the pressure relief channel 31 along the first direction A is configured to be rectangular or trapezoidal. However, this disclosure does not limit the cross-sectional shape of the pressure relief channel 31 along the first direction A.

In addition, the battery 1000 can be constructed as a cylindrical battery, but this disclosure does not limit the specific type of battery 1000.

In addition, the assembly steps for the battery 1000 can be referred to as follows:
1), the elastic sealing member 3 is sleeved on the battery cell 2, and positioning of the elastic sealing member 3 and the battery cell 2 is achieved by means of the sleeved cooperation of a battery cell guide pin 22 and the through hole 30, and fine adjustment can be performed manually;
2), the battery cell 2 is placed into the battery case 1 after soaking the electrolyte;
3), the elastic sealing member 3 and the battery case 1 are sealed by using a rolling groove sealing device.

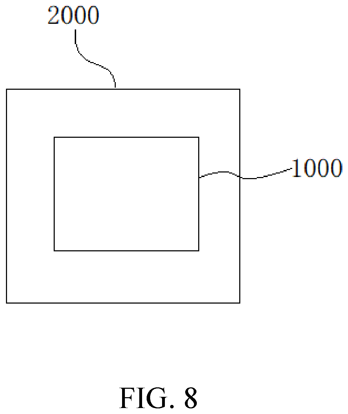

In addition, with reference to FIG. 8, the present disclosure also provides an electric device 2000, which includes the battery 1000. However, the type of electric device 2000 is not limited in the present disclosure. For example, it can be a vehicle, a mobile phone, a portable device, a laptop, an electric toy, an electric tool, a drone, a lighting device, etc. The vehicle can be a fuel-powered vehicle, a pure electric vehicle, a hybrid vehicle, a range-extended vehicle, etc.

The preferred embodiments of the present disclosure have been described in detail above with reference to the accompanying drawings. However, the present disclosure is not limited to the specific details of the above embodiments. Within the technical concept of the present disclosure, various simple modifications can be made to the technical solutions of the present disclosure, and these simple modifications all fall within the protection scope of the present disclosure.

Additionally, it will be noted that the various specific technical features described in the above specific embodiments can be combined in any suitable manner as long as they are not contradictory. To avoid unnecessary repetition, this disclosure will not further elaborate on various possible combinations.

In addition, any combination of various embodiments disclosed herein can be made, as long as it does not deviate from the idea of this disclosure, and it will also be regarded as the content disclosed in this disclosure.

## Claims

1. A battery (1000), comprising:
a battery case (1);
an elastic sealing member (3) connected to the battery case (1) and defining an accommodating cavity (100), the elastic sealing member (3) being formed with a through hole (30) extending along a first direction (A), the through hole (30) being configured to communicate an exterior with the accommodating cavity (100), and a pressure relief portion (300) being arranged on the elastic sealing member (3), the pressure relief portion (300) being configured to rupture when the pressure in the accommodating cavity (100) is greater than a pressure relief threshold, so as to release the pressure in the battery (1000);
a battery cell (2) arranged in the accommodating cavity (100);
a conductive pillar (4), having one end that passes through the through hole (30) and is electrically connected to a tab of the battery cell (2), and the other end that protrudes out of the elastic sealing member (3).

2. The battery (1000) according to claim 1, wherein the pressure relief portion (300) comprises a pressure relief channel (31) and a weak portion (310), the pressure relief channel (31) is configured to communicate the exterior with the accommodating cavity (100), the weak portion (310) blocks the pressure relief channel (31), and the weak portion (310) is configured to rupture when the pressure in the accommodating cavity (100) is greater than a pressure relief threshold.

3. The battery (1000) according to claim 2, wherein
the pressure relief channel (31) comprises a first channel opening (311) and a second channel opening (312), the second channel opening (312) is close to the accommodating cavity (100), and the first channel opening (311) corresponds to the second channel opening (312);
the weak portion (310) is arranged at the first channel opening (311) in a blocking configuration; and/or the weak portion (310) is arranged at the second channel opening (312) in a blocking configuration; and/or, the weak portion (310) is arranged inside the pressure relief channel (31) in a blocking configuration, and the weak portion (310) is located between the first channel opening (311) and the second channel opening (312).

4. The battery (1000) according to claim 3, wherein
the pressure relief channel (31) extends along the first direction (A), in a direction from the first channel opening (311) to the second channel opening (312),
the pressure relief channel (31) has the same channel diameter along a second direction (B), or the channel diameter of the pressure relief channel (31) gradually increases along the second direction (B), or the channel diameter of the pressure relief channel (31) gradually decreases along the second direction (B);
wherein the first direction (A) and the second direction (B) are perpendicular to each other.

5. The battery (1000) according to claim 4, wherein
the weak portion (310) is arranged at the second channel opening (312) in a blocking configuration, a thickness of the weak portion (310) along the first direction (A) is in the range of 0.1 mm to 0.3 mm, and a length of the pressure relief channel (31) along the first direction (A) is in the range of 3.1 mm to 4 mm.

6. The battery (1000) according to any one of claims 3 to 5, wherein
the pressure relief channel (31) extends along the first direction (A), in the direction from the first channel opening (311) to the second channel opening (312), the pressure relief channel (31) comprises a first channel (313) and a second channel (314);
in the direction from the first channel opening (311) to the second channel opening (312), the channel diameter of the first channel (313) gradually decreases along a second direction (B), the second channel (314) has the same channel diameter along the second direction (B), and the weak portion (310) is arranged at the second channel opening (312) in a blocking configuration; wherein the first direction (A) and the second direction (B) are perpendicular to each other.

7. The battery (1000) according to any one of claims 3 to 6, wherein the pressure relief channel (31) extends along the first direction (A), in the direction from the first channel opening (311) to the second channel opening (312), the pressure relief channel (31) comprises a first channel (313) and a second channel (314);
in the direction from the first channel opening (311) to the second channel opening (312), the channel diameter of the first channel (313) gradually decreases along a second direction (B), the channel diameter of the second channel (314) gradually increases along the second direction (B), and the weak portion (310) is arranged between the first channel (313) and the second channel (314), wherein the first direction (A) and the second direction (B) are perpendicular to each other; or,
in the direction from the first channel opening (311) to the second channel opening (312), the channel diameter of the first channel (313) gradually increases along a second direction (B), the channel diameter of the second channel (314) gradually decreases along the second direction (B), and the weak portion (310) is arranged between the first channel (313) and the second channel (314), wherein the first direction (A) and the second direction (B) are perpendicular to each other.

8. The battery (1000) according to claim 7, wherein a size of the first channel (313) along the first direction (A) is in the range of 3.3 mm to 4 mm, and a size of the second channel (314) along the first direction (A) is in the range of 2.8 mm to 3.2 mm.

9. The battery (1000) according to any one of claims 2 to 8, wherein the pressure relief channel (31) extends along the first direction (A) and is spaced apart from the through hole (30) along a second direction (B), and a cross-sectional shape of the pressure relief channel (31) along the first direction (A) is configured to be rectangular or trapezoidal; wherein the first direction (A) and the second direction (B) are perpendicular to each other.

10. An electric device (2000), comprising the battery (1000) according to any one of claims 1 to 9.
